# EUROPÄISCHE PATENTSCHRIFT

(11) **EP 1 147 594 B1**
(45) Veröffentlichungstag und Bekanntmachung des Hinweises auf die Patenterteilung: **14.02.2007**
(21) Anmeldenummer: 00988602.9
(22) Anmeldetag: 10.11.2000
(51) Int. Cl.: H02K 7/18, H02K 5/10, F03B 13/10, H02K 21/14

(54) **HYDRAULISCHER TURBINEN-GENERATOR**
HYDRAULIC TURBOGENERATOR
TURBOGENERATEUR HYDRAULIQUE

(30) Priorität: 16.11.1999 DE 19954964
(43) Veröffentlichungstag der Anmeldung: 24.10.2001
(73) Patentinhaber: ROBERT BOSCH GMBH, 70442 Stuttgart (DE)
(72) Erfinder: KNAPEN, Petrus, Matheus, Josephus, NL-5025 JD Tilburg (NL); MEIJER, Bermardus, Johannes, NL-5025 JX Tilburg (NL); VROMANS, Frans, NL-5041 KC Tilburg (NL)
(86) Internationale Anmeldenummer: PCT/DE2000/004007
(87) Internationale Veröffentlichungsnummer: WO 2001/037403

(56) Entgegenhaltungen:
- CH-A- 293 252
- DE-A- 19 505 698
- DE-A- 19 622 286
- GB-A- 664 654
- US-A- 4 740 725
- US-A- 5 043 592
- PATENT ABSTRACTS OF JAPAN vol. 16, no. 138 (E-1186), 7. April 1992 (1992-04-07) -& JP 04 000231 A (NIPPONDENSO CO LTD), 6. Januar 1992 (1992-01-06)

## Beschreibung

Die Erfindung geht aus von einem hydraulischen Turbinen-Generator nach dem Oberbegriff des Anspruchs 1.

### Stand der Technik

Ein hydraulischer Turbinen-Generator der gattungsgemäßen Art ist aus der US-PS 4 740 725 bekannt. Der hydraulische Turbinen-Generator weist ein Turbinenrad auf, das von einem strömenden hydraulischen Medium angetrieben wird. Auf einer Welle des Turbinenrades sitzt ein Rotor, in Form eines bipolaren Permanentmagneten. Ein Stator ist mit seinen Magnetleitblechen radial um die den Rotor aufnehmende Kammer geführt. Die Magnetleitbleche leiten den Magnetfluß zu einem radial neben dem Rotor liegenden Kern, der mit einer Erregerwicklung versehen ist.

Das Problem bei derartigen hydraulischen Turbinen-Generatoren besteht darin, daß der die Erregerwicklung enthaltende Stator nicht mit dem hydraulischen Medium in Verbindung kommen darf und somit einen hermetischen Abschluß von der Turbine erfordert. Jede Abdichtung zwischen Turbinenkammer und Rotorkammer erfordert Reibungsverluste, so daß der Rotor zweckmäßiger Weise nicht gegenüber der Turbinenkammer abgedichtet ist und somit ebenfalls mit dem hydraulischen Medium beaufschlagt ist. Die Rotorkammer und die Statorkammer sind daher aus Gehäuseteilen zusammengesetzt, die eine hermetische Abdichtung gewährleisten müssen.

Die DE-A1-19 505 698 offenbart auch einen hydraulischen Turbinen-Generator entsprechend dem Stand der Technik.

Aufgabe der vorliegenden Erfindung ist es, einen kompakten und einfach montierbaren hydraulischen Turbinen-Generator zu schaffen.

### Vorteile der Erfindung

Der erfindungsgemäße hydraulische Turbinen-Generator mit den kennzeichnenden Merkmalen des Anspruchs 1 hat den Vorteil, daß er kompakt aufgebaut ist und die Einzelteile durch einfache Montageschritte zusammenfügbar sind. Es ist beispielsweise keine kostenaufwendige Umspritzung der Magnetleitbleche und der Erregerwicklung des Stators notwendig. Die kompakte Bauweise ermöglicht es, daß die einzelnen Teile in einer einzigen Kammer leicht montierbar untergebracht werden können.

Mit den in den Unteransprüchen aufgeführten Maßnahmen sind vorteilhafte Weiterbildungen und Verbesserungen des erfindungsgemäßen hydraulischen Turbinen-Generators möglich. Eine hermetische Abdichtung der fluidführenden Rotorkammer von der Statorkammer ist mittels einer einfachen Trennkappe möglich, die aus einem Kunststoff hergestellt ist. Durch die Ausbildung einer Aufnahme für die Welle in der Trennkappe wird ferner gewährleistet, daß die Welle keine zusätzliche Abdichtung benötigt. Es sind somit keine Abdichtungen für rotierende Teile notwendig.

### Zeichnung

Ein Ausführungsbeispiel der Erfindung ist in der Zeichnung dargestellt und in der nachfolgenden Beschreibung näher erläutert.

Es zeigen:
- Figur 1: eine Schnittdarstellung durch eine Armatur mit einem erfindungsgemäßen hydraulischen Turbinen-Generator,

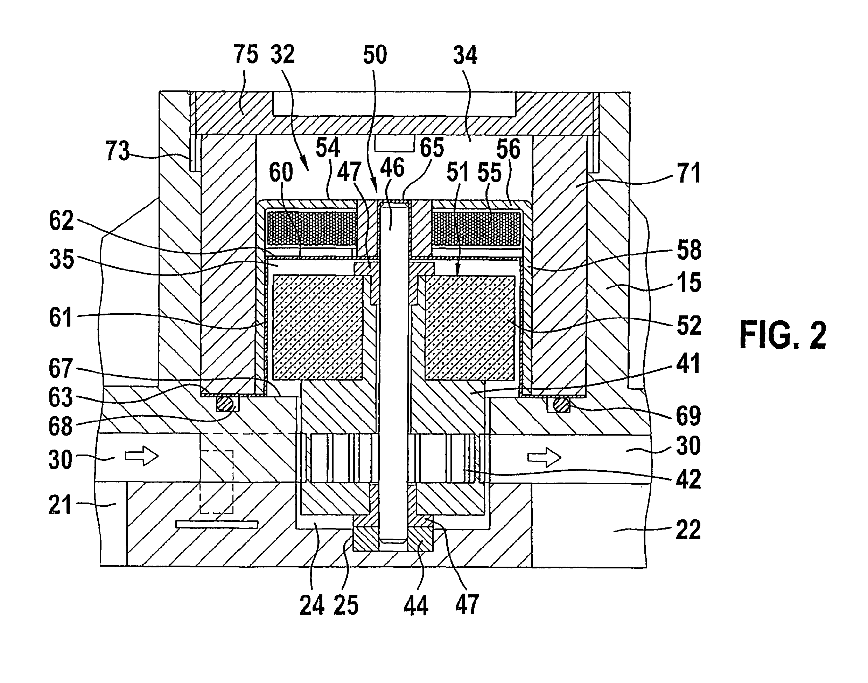

- Figur 2: eine vergrößerte Schnittdarstellung der Einzelheit A in Figur 1,
- Figur 3: eine Draufsicht auf einen Stator des erfindungsgemäßen Turbinen-Generators und
- Figur 4: ein Schnittdarstellung nach der Linie IV-IV in Figur 3.

### Ausführungsbeispiel

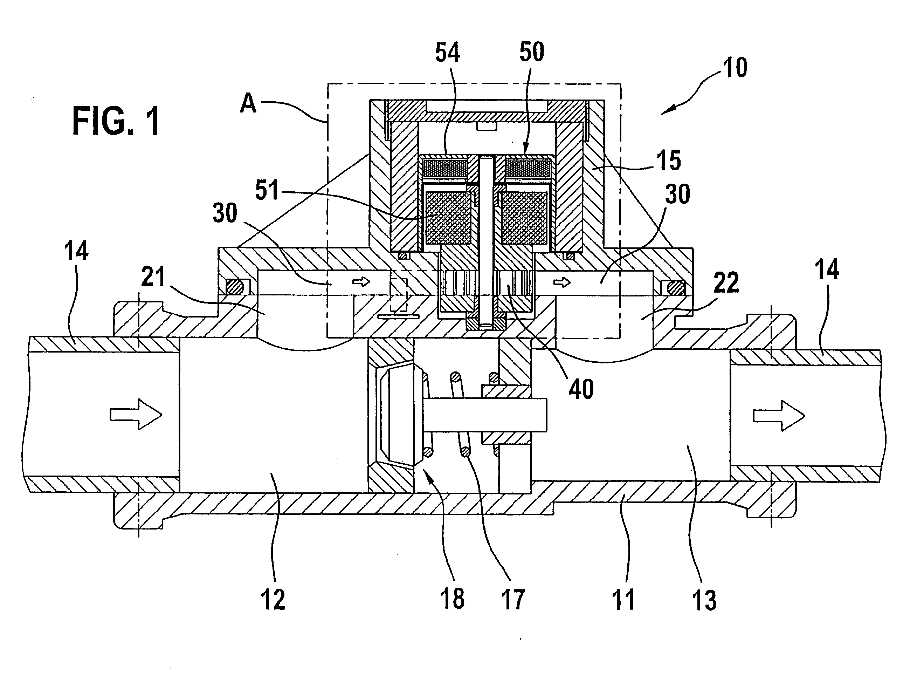

Figur 1 zeigt eine Schnittdarstellung durch eine Armatur 10, die beispielsweise in einen wasserführenden Leitungsstrang 14 einsetzbar ist. Die Armatur 10 weist ein rohrförmiges Leitungsgehäuse 11 mit einem zuströmseitigen Abschnitt 12 und einer ausströmseitigen Abschnitt 13 sowie ein Generatorgehäuse 15 auf. Im Leitungsgehäuse 11 ist ein mit einer Druckfeder 17 beaufschlagtes Drosselventil 18 angeordnet, das druckabhängig beim Öffnen eines nicht dargestellten Auslaßventils im Leitungsstrang den Durchfluß freigibt. Die Fließrichtung des Wassers ist durch Pfeile dargestellt.

Im Leitungsgehäuse 11 ist ferner ein Bypass-Einlaß 21 und ein Bypass-Auslaß 22 vorgesehen, die zu einem beispielsweise in einem Boden des Generatorgehäuses 15 ausgebildeten Bypass 30 führen. Das Drosselventil 18 ist dabei so eingestellt, daß eine weitgehend konstante Strömungsmenge über den Bypass 30 fließt. Im Generatorgehäuse 15 ist ein von einer Turbine 40 angetriebener Generator 50 mit einem Rotor 51 und einem Stator 54 angeordnet.

Die Turbine 40 weist ein Turbinenrad 41 mit Turbinenschaufeln 42 auf, wobei die Turbinenschaufeln 42 in der Ebene des Bypasses 30 liegen und deren Breite im wesentlichen der Höhe des Bypasses 30 entspricht. Im Leitungsgehäuse 11 ist eine Vertiefung 24 mit einem Sackloch 25 ausgebildet, wobei in der Vertiefung 24 ein unterer Abschnitt des Turbinenrads 41 läuft. Im Sackloch 25 ist ein Aufnahme 44 für eine feststehende Welle 46 angeordnet. Auf der Welle 46 sitzen zwei Lager 47, die mit dem Turbinenrad 41 drehfest verbunden sind. Auf einem oberen Abschnitt des Turbinenrads 41 ist ferner ein Permanentmagnet 52 als Rotor 51 befestigt. Der Permanentmagnet 52 ist in beispielsweise 16 Pole radial magnetisiert. Das Turbinenrad 41 ist somit zusammen mit dem Permanentmagneten 52 drehbar auf der feststehenden Welle 46 gelagert. Es ist aber genauso denkbar, das Turbinenrad 41 und den Permanentmagneten 52 drehfest mit der Welle 46 zu verbinden und die Welle 46 drehbar zu lagern.

Das Generatorgehäuse 15 ist mit einer Kammer 32 zur Aufnahme des Generators 50 ausgeführt. Die Kammer 32 ist in eine statorseitige Kammer 34 und eine rotorseitige Kammer 35 geteilt. In der Kammer 32 ist der Stator 54 mit einer Erregerwicklung 55 und mit klauenpolartigen Magnetleitblechen 56 drehfest angeordnet. Die Anordnung des Stators 54 erfolgt dabei in axialer Richtung oberhalb des Rotors 52, so daß die Erregerwicklung 55 im wesentlichen außerhalb der radialen Projektion des Permanentmagneten 52 liegt und dadurch nicht in unmittelbarer Nähe der von den Polen des Permanentmagneten 52 gebildeten Magnetfeldlinien.

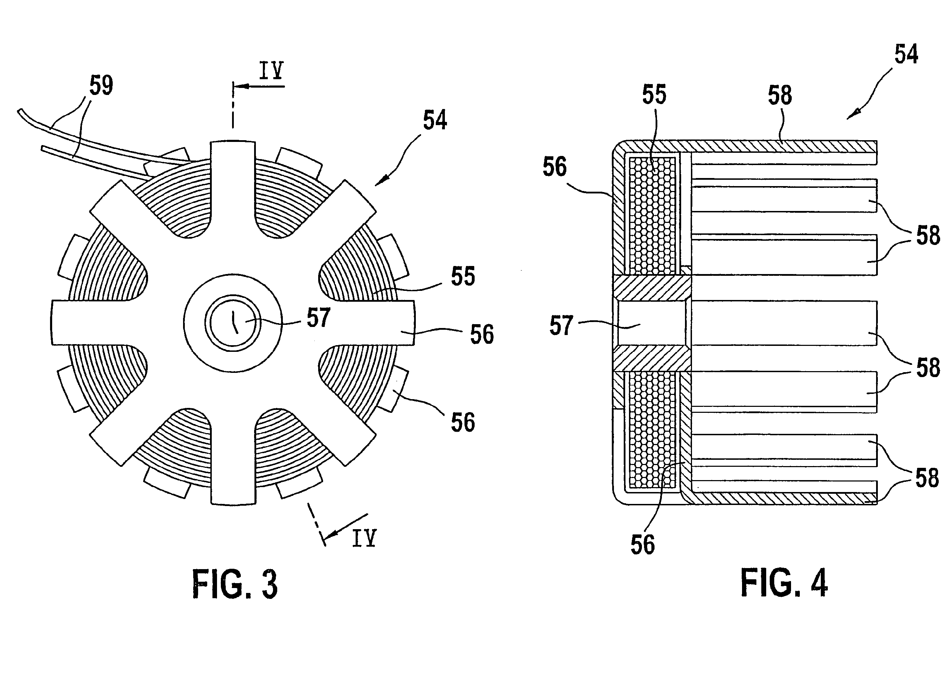

Die klauenpolartigen Magnetleitbleche 56 sind jeweils für Nord- und Südpol von der radialen Wickelrichtung der Erregerwicklung 55 mit axialen Abschnitten 58 in axiale Richtung gelegt. Dadurch schneiden die Magnetfeldlinien des Permanentmagneten 52 die klauenpolartigen Magnetleitbleche 56 und leiten den Magnetfluß zur Erregerwicklung 55, in der eine entsprechende Wechselspannung induziert wird, die mittels Anschlüsse 59 zu einem Verbraucher geleitet wird (Figur 3 und 4).

Die statorseitige Kammer 34 und die rotorseitige Kammer 35 werden von einer nichtmagnetischen Trennkappe 60 getrennt, die beispielsweise aus Kunststoff ausgeführt ist. Die Trennkappe 60 weist einen axialen Abschnitt 61, einen ersten radialen Abschnitt 62, einen flanschartigen zweiten radialen Abschnitt 63 sowie eine Aufnahme 65 für die Welle 46 auf, wobei die Aufnahme 65 in eine Öffnung 57 des Stators 54 greift. Dadurch ist die Welle 46 zur statorseitigen Kammer 34 hin abgedichtet. Der axiale Abschnitt 61 erstreckt sich entlang der axialen Abschnitte 58 der klauenpolartigen Magnetleitbleche 56.

Im Generatorgehäuse 15 ist ein innerer Boden 67 mit einem Ringspalt 68 ausgebildet. Im Ringspalt 68 befindet sich eine Dichtung 69. Zur Abdichtung der rotorseitigen Kammer 35 liegt der flanschartige Abschnitt 63 der Trennkappe 60 auf der Dichtung 69. Dabei ist eine Hülse 71 vorgesehen, die in die Kammer 32 geschoben ist und den Abschnitt 63 gegen die Dichtung 69 drückt. Die Abdichtung ermöglicht es, daß die rotorseitige Kammer 35 mit Wasser beaufschlagt sein kann. Somit ist bei dem vorliegenden Turbinen-Generator lediglich eine Abdichtung zum Stator 54 hin notwendig. Dadurch, daß die Welle 46 in der Aufnahme 65 der Trennkappe 60 sitzt, sind außerdem keine Dichtungen für rotierende Teile notwendig.

Zum Befestigen der Hülse 71 weist die Kammer 32 am oberen Abschnitt ein Gewinde 73 auf, in das ein ebenfalls mit einem Gewinde versehener Deckel 75 einschraubbar ist. Durch das Einschrauben des Deckels 75 wird die Hülse 71 gegen den zweiten radialen Abschnitt 63 der Trennkappe 60 gedrückt und so die beschriebene Abdichtung zwischen rotorseitiger Kammer 35 und statorseitiger Kammer 34 erzielt.

Zum Schutz des Stators 54 vor Feuchtigkeit ist es außerdem denkbar, in den Deckel 75 eine Öffnung zum Einfüllen eines Polymerharzes vorzusehen, das sich dann oberhalb der Trennkappe 60 ausbreitet und dadurch die Erregerwicklung 55 umschließt.

Das beschriebene Ausführungsbeispiel ermöglicht eine kompakte Bauweise eines Turbinen-Generators, wobei die einzelnen Teile in einer einzigen Kammer leicht montierbar untergebracht sind.

## Patentansprüche

1. Hydraulischer Turbinen-Generator mit einem Turbinenrad (41) und eine Generator (50) wobei der Generator (50) einen Rotor (51) und einen Stator (54) mit einer Erregerwicklung (55) aufweist, die in einem Gehäuse (15) angeordnet sind, und wobei der Rotor (51) und das Turbinenrad (41) eine gemeinsame Achse (46) aufweisen, **dadurch gekennzeichnet, daß** die Erregerwicklung (55) des Stators (54) in axialer Richtung außerhalb der radialen Projektion des Rotors (51) angeordnet ist und daß der Stator (54) klauenpolartige Magnetleitbleche (56) aufweist, die axial in die radiale Projektion des Rotors (51) geführt sind.

2. Hydraulischer Turbinen-Generator nach Anspruch 1, **dadurch gekennzeichnet, daß** der Stator (54) in einer Gehäusekammer (34) angeordnet ist, die von einer weiteren Gehäusekammer (35) mittels einer Trennkappe (60) hermetisch getrennt ist.

3. Hydraulischer Turbinen-Generator nach Anspruch 2, **dadurch gekennzeichnet, daß** die Trennkappe (60) einen radialen Flanschabschnitt (63) aufweist, mit dem eine dichte Verbindung zwischen Gehäuse (15) und Trennkappe (60) herstellbar ist.

4. Hydraulischer Turbinen-Generator nach Anspruch 3, **dadurch gekennzeichnet, daß** in der Gehäusekammer (34) eine Hülse (71) angeordnet ist, die auf den radialen Flanschabschnitt (63) drückt.

5. Hydraulischer Turbinen-Generator nach Anspruch 2, **dadurch gekennzeichnet, daß** die klauenpolartigen Magnetleitbleche (56) axial verlaufende Abschnitte (58) aufweisen, die zwischen dem Gehäuse (15) und der Trennkappe (60) verlaufen.

6. Hydraulischer Turbinen-Generator nach Anspruch 5, **dadurch gekennzeichnet, daß** im Gehäuse (15) eine Hülse (71) angeordnet ist und daß die axial verlaufenden Abschnitte (58) der Magnetleitbleche (56) zwischen der Hülse (71) und der Trennkappe (60) verlaufen.

7. Hydraulischer Turbinen-Generator nach Anspruch 2, **dadurch gekennzeichnet, daß** die Trennkappe (60) eine Aufnahme (65) für die Welle (46) aufweist.

8. Hydraulischer Turbinen-Generator nach Anspruch 7, **dadurch gekennzeichnet, daß** die Welle (46) feststehend im Gehäuse (15) und in der Trennkappe (60) angeordnet ist und daß der Rotor (51) und das Turbinenrad (41) drehbar auf der Welle (46) gelagert sind.

9. Hydraulischer Turbinen-Generator nach Anspruch 7, **dadurch gekennzeichnet, daß** die Welle (46) drehbar im Gehäuse (15) und in der Trennkappe (60) gelagert ist und daß der Rotor (51) und das Turbinenrad (41) drehfest auf der Welle (46) angeordnet sind.

## Claims

1. A hydraulic turbine generator comprising a turbine wheel (41) and a generator (50), wherein the generator (50) comprises a rotor (51) and a stator (54) with a field winding (55) which are arranged in a housing (15), and wherein the rotor (51) and the turbine wheel (41) have a common axis (46), **characterised in that** the field winding (55) of the stator (54) is arranged in the axial direction outside the radial projection of the rotor (55) and the stator (54) comprises claw-pole-like magnetoconductive sheets (56) which are guided axially in the radial projection of the rotor (51).

2. The hydraulic turbine generator according to claim 1, **characterised in that** the stator (54) is arranged in a housing chamber (34) which is hermetically separated from a further housing chamber (35) by means of a separating cap (60).

3. The hydraulic turbine generator according to claim 2, **characterised in that** the separating cap (60) comprises a radial flange section (63) which can produce a tight connection between the housing (15) and separating cap (60).

4. The hydraulic turbine generator according to claim 3, **characterised in that** a sleeve (71) is arranged in the housing chamber (34), said sleeve pressing onto the radial flange section (63).

5. The hydraulic turbine generator according to claim 2, **characterised in that** the claw-pole like magnetoconductive sheets (56) comprise axial sections (58) which run between the housing (15) and the separating cap (60).

6. The hydraulic turbine generator according to claim 5, **characterised in that** a sleeve (71) is arranged in the housing (15) and the axial sections (58) of the magnetoconductive sheets (56) run between the sleeve (71) and the separating cap (60).

7. The hydraulic turbine generator according to claim 2, **characterised in that** the separating cap (60) comprises a receptacle (65) for the shaft (46).

8. The hydraulic turbine generator according to claim 7, **characterised in that** the shaft (46) is arranged fixedly in the housing (15) and in the separating cap (60) and that the rotor (51) and the turbine wheel (41) are mounted rotatably on the shaft (46).

9. The hydraulic turbine generator according to claim 7, **characterised in that** the shaft (46) is mounted rotatably in the housing (15) and in the separating cap (60) and that the rotor (51) and the turbine wheel (41) are arranged in a torsion-proof manner on the shaft (46).

## Revendications

1. Générateur à turbine hydraulique, comportant une roue de turbine (41) et un générateur (50), moyennant quoi le générateur (50) présente un rotor (51) et un stator (54) avec un enroulement d'excitation (55), qui sont disposés dans un bâti (15), et moyennant quoi le rotor (51) et la roue de turbine (41) présentent un arbre commun (46), **caractérisé en ce que** l'enroulement d'excitation (55) du stator (54) est disposé dans la direction axiale à l'extérieur de la projection radiale du rotor (51) et **en ce que** le stator (54) présente des déflecteurs à aimants (56) de type pôles à griffes, qui sont guidés axialement dans la projection radiale du rotor (51).

2. Générateur à turbine hydraulique selon la revendication 1, **caractérisé en ce que** le stator (54) est disposé dans une chambre de bâti (34), qui est séparée hermétiquement d'une autre chambre de bâti (35) au moyen d'un capuchon de séparation (60).

3. Générateur à turbine hydraulique selon la revendication 2, **caractérisé en ce que** le capuchon de séparation (60) présente une portion de bride (63) radiale, avec laquelle une liaison étanche entre le bâti (15) et le capuchon de séparation (60) peut être produite.

4. Générateur à turbine hydraulique selon la revendication 3, **caractérisé en ce que** dans la chambre de bâti (34) un manchon (71) est disposé, lequel presse sur la portion de bride radiale (63).

5. Générateur à turbine hydraulique selon la revendication 2, **caractérisé en ce que** les déflecteurs à aimants (56) de type pôles à griffes présentent des portions (58) s'étendant axialement, qui s'étendent entre le bâti (15) et le capuchon de séparation (60).

6. Générateur à turbine hydraulique selon la revendication 5, **caractérisé en ce que** dans le bâti (15) un manchon (71) est disposé et **en ce que** les portions (58) s'étendant axialement des déflecteurs à aimants (56) s'étendent entre le manchon (71) et le capuchon de séparation (60).

7. Générateur à turbine hydraulique selon la revendication 2, **caractérisé en ce que** le capuchon de séparation (60) présente un réceptacle (65) pour l'arbre (46).

8. Générateur à turbine hydraulique selon la revendication 7, **caractérisé en ce que** l'arbre (46) est disposé de manière fixe dans le bâti (15) et dans le capuchon de séparation (60) et **en ce que** le rotor (51) et la roue de turbine (41) sont positionnés de manière rotative sur l'arbre (46).

9. Générateur à turbine hydraulique selon la revendication 7, **caractérisé en ce que** l'arbre (46) est positionné de manière rotative dans le bâti (15) et dans le capuchon de séparation (60) et **en ce que** le rotor (51) et la roue de turbine (41) sont disposés sur l'arbre (46) de manière solidaire en rotation.
